(19)

Europäisches
Patentamt

European
Patent Office

Office européen
des brevets

(11) **EP 1 718 023 B1**

(12) **EUROPEAN PATENT SPECIFICATION**

(45) Date of publication and mention
of the grant of the patent:
**25.07.2012 Bulletin 2012/30**

(51) Int Cl.:
*H04L 27/26* (2006.01)        *H04L 25/03* (2006.01)

(21) Application number: **06252218.0**

(22) Date of filing: **25.04.2006**

(54) **Reducing of Inter Symbol Interference larger than a Guard Interval in OFDM**

Unterdrückung von Intersymbolinterferenz breiter als das OFDM-Schutzintervall

Réduction d'interférence inter-symboles plus large que l'intervalle de garde en OFDM

(84) Designated Contracting States:
**DE FI FR GB SE**

(30) Priority: **28.04.2005 JP 2005131575**

(43) Date of publication of application:
**02.11.2006 Bulletin 2006/44**

(73) Proprietor: **NEC Corporation**
**Minato-ku**
**Tokyo 108-8001 (JP)**

(72) Inventor: **Oketani, Kengo**
**Tokyo (JP)**

(74) Representative: **MacDougall, Alan John Shaw et al**
**Mathys & Squire LLP**
**120 Holborn**
**London**
**EC1N 2SQ (GB)**

(56) References cited:
**WO-A-03/039088**

- **KARP T ET AL: "Zero-forcing frequency domain equalization for dmt systems with insufficient guard interval" 2003 IEEE INTERNATIONAL CONFERENCE ON ACOUSTICS, SPEECH, AND SIGNAL PROCESSING. PROCEEDINGS. (ICASSP). HONG KONG, APRIL 6 - 10, 2003, IEEE INTERNATIONAL CONFERENCE ON ACOUSTICS, SPEECH, AND SIGNAL PROCESSING (ICASSP), NEW YORK, NY : IEEE, US, vol. VOL. 1 OF 6, 6 April 2003 (2003-04-06), pages IV221-IV224, XP010641136 ISBN: 0-7803-7663-3**
- **OHNO S: "Maximum Likelihood Inter-Carrier Interference Suppression for Wireless OFDM with Null Subcarriers" ACOUSTICS, SPEECH, AND SIGNAL PROCESSING, 2005. PROCEEDINGS. (ICASSP '05). IEEE INTERNATIONAL CONFERENCE ON PHILADELPHIA, PENNSYLVANIA, USA MARCH 18-23, 2005, PISCATAWAY, NJ, USA,IEEE, 18 March 2005 (2005-03-18), pages 849-852, XP010792380 ISBN: 0-7803-8874-7**

**Description**

BACKGROUND OF THE INVENTION

The present invention relates to a radio communication system, a radio communication apparatus, receiving apparatus and radio communication method for the Orthogonal Frequency Division Multiplexing (ODFM) modulation system, and more particularly, to a technique for reducing interblock interference caused by a delayed wave.

In recent years, the OFDM (Orthogonal Frequency Division Multiplexing) modulation system has attracted attention in the field of radio communication such as mobile communication.

Generally, in a radio communication system, a delayed wave may be caused by multipaths due to the environment of the propogation path. In a radio communication system using OFDM, to eliminate the influence of such a delayed wave, a guard interval (GI) is periodically added to a transmit signal. A GI may have a predetermined time period. An OFDM transmitting apparatus segments data into blocks of a predetermined size and adds a GI between the blocks and transmits the resultant data.

When a delay of the delayed wave is equal to or smaller than the time period of the GI, a signal from the adjacent block leaks only to the GI and does not leak to the block, thereby the interblock interference does not occur. More specifically, it can be said that an OFDM radio communication system has tolerance to a multipath interference caused by a delay equal to or smaller than the GI.

However, as the length of the GI is increased, transmission efficiency becomes lower. Thus, in an actual system, a balance between transmission efficiency and tolerance to multipath interference is considered when determining a GI. Accordingly, a delay caused by multipaths may exceed a GI due to the actual environment of propagation path. In this case, interblock interference occurs, and thus, orthogonality between subcarriers within a block is lost, causing a large characteristic degradation.

To solve this problem, teachings have been proposed for reducing the influence of a delayed wave exceeding a GI (for example, refer to Japanese Patent Laid-Open Patent No. 2004-208254, paragraph No. 0020). The communication apparatus described in Japanese Patent Laid-Open Patent No. 2004-208254 measures a maximum delay time from a pilot channel and checks whether or not a delayed wave exceeding a GI exists. If so, the communication apparatus calculates an interference component reaching a subsequent block based on a known pilot sequence and a channel estimation value, and subtracts the interference component from the subsequent block. In this manner, the communication apparatus reduces the influence of a delayed wave exceeding a GI.

However, the communication apparatus of the prior art estimates the interference component by using the preceding block and eliminates the interference component by subtracting the component from the block. Therefore, an error could be conveyed to the subsequent block and the quality of the communication may be deteriorated.

Ohno. S; "Maximum Likelihood Inter-Carrier Interference Suppression for Wireless OFDM with Null Subcarriers"; ICASSP 2005; III; 849 - 851, proposes a Viterbi-type algorithm for suppressing inter-carrier interference.

WO03039088 A1, and Karp T et al; "Zero-forcing Frequency Domain Equalization For DMT Systems With Insufficient Guard Interval"; ICASSP 2003; IV; 221 - 223, both describe frequency equalisation for multitone transmission systems. Karp T et al discloses an adaptive loading algorithm for choosing the length of a guard interval, and the position of unused subcarriers, in a zero-forcing frequency domain filter.

SUMMARY OF THE INVENTION

One of the objects of the preferred embodiments of the present invention is to provide a radio communication system capable of satisfactorily reducing the influence of a delayed wave.

Aspects of the present invention are recited in the independent claims.

BRIEF DESCRIPTION OF THE DRAWINGS

Preferred features of the present invention will now be described, by way of example only, with reference to the accompanying drawings, in which:-

Fig. 1 is a block diagram showing a configuration of a radio communication system according to a first exemplary embodiment of a radio system.

Fig. 2 is a block diagram showing a configuration of a radio communication apparatus according to the first exemplary embodiment.

Fig. 3 is a view for explaining the process of a transmitting unit according to the first exemplary embodiment.

Fig. 4 is a view for explaining the operation of a block segmentation/subcarrier mapping unit according to the first exemplary embodiment.

Fig. 5 is a view for explaining the process of adding a GI.

Fig. 6 is a flowchart showing an example of interference elimination operation by a receiving unit of the radio communication apparatus according to the present exemplary embodiment.

Fig. 7 is a block diagram showing a configuration of a radio communication apparatus according to a second exemplary embodiment of a radio system.

Fig. 8 is a block diagram showing a configuration of a radio communication apparatus according to a fourth exemplary embodiment of a radio system.

## DETAILED DESCRIPTION OF EXEMPLARY EMBODIMENTS

Hereinafter, the present invention will now be described, by way of example only, with reference to the accompanying drawings. The described exemplary embodiments are intended to assist in understanding the invention, and are not intended to limit the scope of the invention in any way.

Exemplary embodiments of radio systems will be described in detail with reference to the drawings.

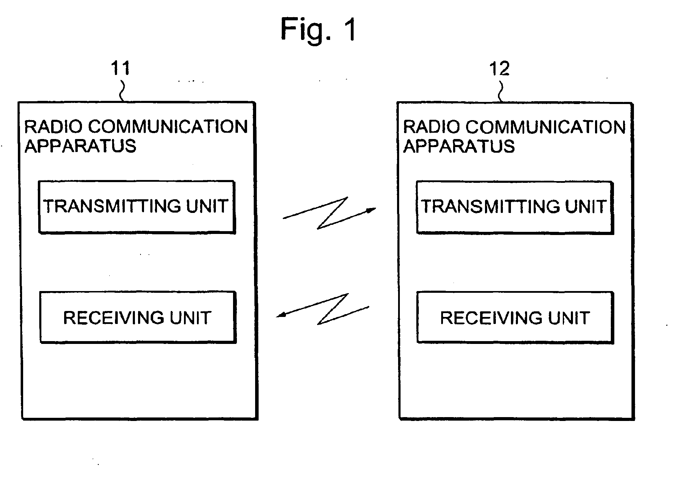

Fig. 1 is a block diagram showing a configuration of a radio communication system according to a first exemplary embodiment. Referring to Fig. 1, the radio communication system according to the first exemplary embodiment includes radio communication apparatuses 11 and 12. According to the present exemplary embodiment, by way of example, the radio communication apparatuses 11 and 12 have the same configuration and bilaterally communicate with each other in the OFDM (Orthogonal Frequency Division Multiplexing) modulation system. A radio communication apparatus 11, 12 may be a cellular phone, a Personal Digital Assistant (PDA), a Personal Computer (PC) and the like which utilizes the OFDM modulation technology.

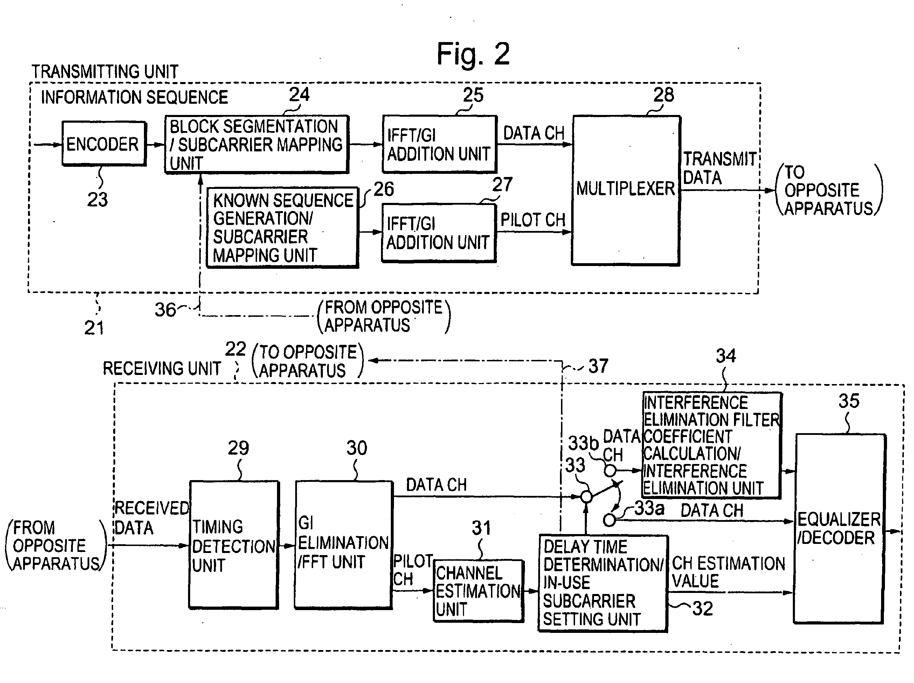

Fig. 2 is a block diagram showing a configuration of a radio communication apparatus according to the first exemplary embodiment. The radio communication apparatuses 11 and 12 have the same configuration, and hence the radio communication apparatus 11 is shown here as representative.

Referring to Fig. 2, the radio communication apparatus 11 has a transmitting unit 21 and a receiving unit 22.

The transmitting unit 21 includes an encoder 23, a block segmentation/subcarrier mapping unit 24, a known sequence generation/subcarrier mapping unit 26, IFFT/GI addition units 25 and 27, and a multiplexer 28. The transmitting unit 21 is an OFDM transmitter which selects subcarriers based on subcarrier selection information 36 fed back from the receiving unit 22 of an opposite apparatus.

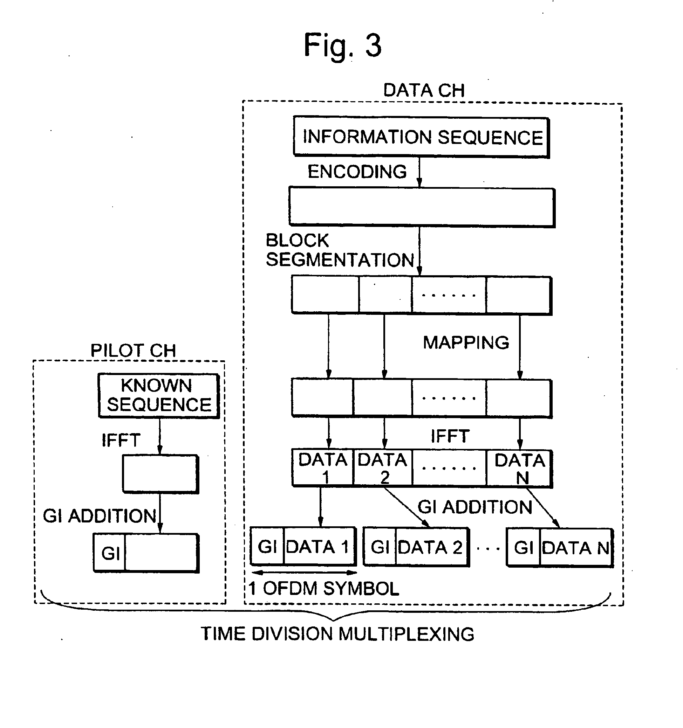

Fig. 3 shows the process of the transmitting unit according to the first exemplary embodiment.

As shown in Fig. 3, the transmitting unit 21 generates a data channel (DataCH) on which an information sequence of transmit data is mapped and a pilot channel (PilotCH) on which a known pilot signal is mapped, and time-division-multiplexes and transmits both the DataCH and the PilotCH. Referring to Fig. 2, the block segmentation/subcarrier mapping unit 24 and the IFFT/GI addition unit 25 are provided for the data channel (DataCH). The known sequence generation/subcarrier mapping unit 26 and the IFFT/GI addition unit 27 are provided for the pilot channel (PilotCH).

The encoder 23 receives an information sequence, and performs an encoding process, such as addition of error-correcting code, to the information sequence, and sends it to the block segmentation/subcarrier mapping unit 24.

The block segmentation/subcarrier mapping unit 24 selects subcarriers to be used, based on subcarrier selection information 36 fed back from the receiving unit 22 of an opposite apparatus (not shown). Here, assume that the total number of subcarriers is C and the subcarriers are termed 1, 2, ⋯, C in the order of lower-frequency subcarrier, and that the number of subcarriers selected as a subcarrier to be used is Q ($C \geq Q$).

Also, the block segmentation/subcarrier mapping unit 24 segments data sent from the encoder 23 into blocks for each Q-number of symbols. Thereafter the block segmentation/subcarrier mapping unit 24 maps the Q-number of symbols onto the Q-number of subcarriers (in-use subcarrier) selected as the ones to be used, and maps "0" onto a portion corresponding to (C - Q)-number of subcarriers (idle subcarrier) not selected. This mapping process is performed on a per block basis.

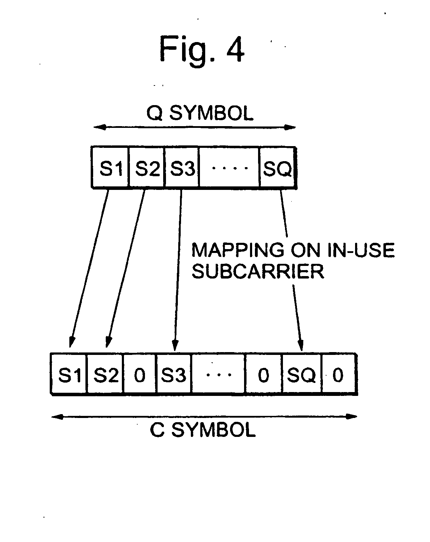

Fig. 4 shows the operation of the block segmentation/subcarrier mapping unit according to the first exemplary embodiment. Referring to Fig. 4, Q-number of symbols (S1 to SQ) are mapped onto Q-number of subcarriers to be used from among C-number of subcarriers, and "0" is mapped onto (C - Q)-number of subcarriers not to be used.

Accordingly, a block constituted of C-number of symbols is generated. The block segmentation/subcarrier mapping unit 24 sends the generated block to the IFFT/GI addition unit 25.

It is noted that before subcarrier selection information 36 is fed back, the block segmentation/subcarrier mapping unit 24 may randomly select the subcarriers to be used.

The IFFT/GI addition unit 25 performs an IFFT (Inverse Fast Fourier Transformation) process having C-number of analysis points to a block.sent from the block segmentation/subcarrier mapping unit 24, and adds to the resultant C-number of symbols a GI with number-N symbols.

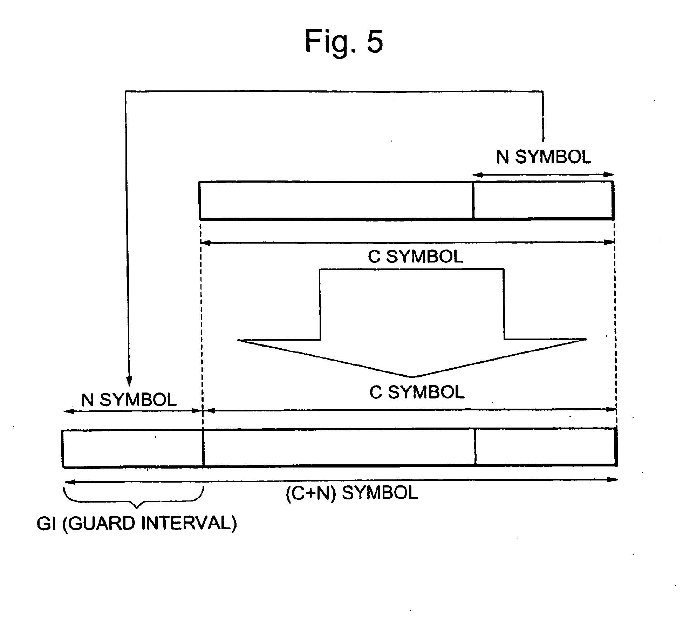

Fig. 5 shows the process of adding a GI. As shown in Fig. 5, the process of adding a GI is a process of copying from a series of N-number of symbols constituting the tail end of the block composed of C-number of symbols to the front of a block. Accordingly, data composed of (C + N)-number of symbols is generated. The IFFT/GI addition unit 25 sends the generated data to the multiplexer 28.

It is noted here that there is a clear distinction between a simpler term "symbol" and an "OFDM symbol". An OFDM symbol means a group of data having added thereto an GI. A symbol means individual data obtained by encoding an information sequence.

The known sequence generation/subcarrier mapping unit 26, provided for the pilot channel, maps a known sequence onto C-number of subcarriers in one apparatus and an opposite apparatus thereof (not shown). The known sequence is, for example, data of symbols being all "1" or being all "1 + j" (j being an imaginary number unit). Thereafter, the known sequence generation/subcarrier mapping unit 26 sends to the IFFT/GI addition unit 27 a block obtained by mapping a known sequence.

Similarly to the IFFT/GI addition unit 25 for the data channel, the IFFT/GI addition unit 27 performs an IFFT process having C-number of analysis points for data sent from the known sequence generation/subcarrier mapping unit 26, and further adds a GI composed of Np-number of symbols to the data.

Accordingly, data composed of (C + Np)-number of symbols is generated. The IFFT/GI addition unit 27 sends the generated data to the multiplexer 28.

The length of the GI (Np symbols) of the pilot channel is defined separately from that of the GI (N symbols) of the data channel. When the length of the GI of the pilot channel is shorter than a maximum a delay time of delayed wave, a block corresponding to the pilot channel may be interfered with by a preceding block, and a channel estimation value (CH estimation value) thereof cannot be accurately determined. Thus, the length of the GI of the pilot channel is a preferably equal to or greater than a maximum delay time of a delayed wave. More specifically, when a maximum delay time of delayed wave is L [symbols], it is preferable that $Np \geq L$.

The multiplexer 28 time-division-multiplexes a data channel sent from the IFFT/GI addition unit 25 and a pilot channel sent from the IFFT/GI addition unit 27 and sends the channels that have been multiplexed to an opposite apparatus.

Meanwhile, the receiving unit 22 includes a timing detection unit 29, a GI elimination/FFT unit 30, a channel estimation unit 31, a delay time determination/in-use subcarrier setting unit 32, a switch 33, an elimination filter coefficient calculation/interference elimination unit 34, and an equalizer/decoder 35.

The timing detection unit 29 detects timing information from a data sequence received from the opposite apparatus and sends the received data and the timing information to the GI elimination/FFT unit 30.

The GI elimination/FFT unit 30 identifies the position of the GI within the received signal based on the timing information sent from the timing detection unit 29, and eliminates the GI from the received signal. Further, the GI elimination/FFT unit 30 performs an FFT (Fast Fourier Transformation) process on the received signal from which the GI has been eliminated, to separate the pilot channel and data channel, which have been time-division-multiplexed on the received signal. Thereafter, the GI elimination/FFT unit 30 sends the pilot channel to the channel estimation unit 31, and the data channel to the switch 33.

The channel estimation unit 31 performs a channel estimation process by using the known sequence as a pilot channel, and sends the obtained channel estimation value to the delay time determination/in-use subcarrier setting unit 32 along with the timing information.

Here, the channel estimation value means a propagation path frequency characteristics value of each carrier, and more specifically, means a value obtained by dividing by a known sequence ("1" or "1 + j" in the above described example), each subcarrier data obtained after the FFT process is performed by the GI elimination/FFT unit 30. Accordingly, the channel estimation value is composed of data corresponding to the number of subcarriers (C number).

The delay time determination/in-use subcarrier setting unit 32 generates a delay profile of the propagation path, for example, by applying an IFFT process to the channel estimation value. The delay profile of propagation path means information indicating the relationship between the delay time and the level of a delayed wave. The timing and level of an incoming delayed wave can be identified from the delay profile of the propagation path. The delay time determination/in-use subcarrier setting unit 32 determines, based on the delay profile, whether or not a delayed wave exceeding a GI exists. More specifically, the delay time determination/in-use subcarrier setting unit 32 determines whether or not a maximum delay time (L [symbol]) > the length of the data channel GI (N [symbol]). If L > N, then it may mean that a delayed wave exceeding a GI exists. If $N \geq L$, then it may mean that no delayed wave exceeding a GI exists.

When a delayed wave exceeding a GI exists, the delay time determination/in-use subcarrier setting unit 32 calculates a length T (= L - N) [symbol] of a maximum delay time of a delayed wave exceeding a GI, and selects (C - T)-number of subcarriers, and feeds back the information about the subcarriers as subcarrier selection information 37 to the transmitting unit 21 of the opposite apparatus. Assume that, according to the present exemplary embodiment, a method for selecting (C - T)-number of subcarriers is employed by which (C - T)-number of subcarriers having a large gain in the channel estimation value are selected. However, the present invention is not limited to this method. (C - T)-number of subcarriers may be selected by another method. For example, subcarriers having a small gain in the channel estimation value may be selected, or alternatively, subcarriers having a medium gain may be selected.

Meanwhile, when no delayed wave exceeding a GI exists, the delay time determination/in-use subcarrier setting unit 32 selects all C-number of subcarriers and feeds back the subcarriers as subcarrier selection information 37 to the transmitting unit 21 of the opposite apparatus.

When no delayed wave exceeding a GI exists, or when a delayed wave exceeding a GI exists and at the same time the number of idle subcarriers which have not been selected at this time is smaller than T (= L - N), the delay time determination/in-use subcarrier setting unit 32 causes the switch 33 to select a terminal 33a. Accordingly, the data channel sent from the GI elimination/FFT unit 30 and the channel estimation value sent from the delay time determination/in-usesubcarriersetting unit 32 are directly sent to the equalizer/decoder 35.

Meanwhile, when a delayed wave exceeding a GI exists and at the same time the number of idle subcarriers which have not been selected at this time, is equal to or greater than T (= L - N), the delay time determination/in-use subcarrier setting unit 32 causes the switch 33 to select a terminal 33b. Accordingly, the received data sent from the GI elimination/FFT unit 30 is sent to the interference elimination filter coefficient calculation/interference elimination unit 34.

The interference elimination filter coefficient calculation/interference elimination unit 34 calculates an interference elimination filter coefficient, eliminates interblock interference contained in the data channel by using the interference elimination filter coefficient and sends to the equalizer/decoder 35 data having eliminated therefrom the interblock interference. This process of eliminating interblock interference utilizes the fact that "0" has been inserted in the idle subcarriers, and is a process of estimating an interference component leaked into the in-use subcarriers from a component emerging in the idle subcarriers, and eliminating the interference component. Specifically, the interference elimination filter coefficient calculation/interference elimination unit 34 multiplies data sent from the GI elimination/FFT unit 30 by the interference elimination filter coefficient and thereby eliminates the interference.

The interference elimination filter coefficient used in this process is provided by Equation 1. The calculation of interference elimination filter W is described later.

$$W = P_1' P_1 \left( I - F'(P_2 F')^{-1} P_2 \right) \quad \text{[Equation 1]}$$

In Equation 1, W denotes an interference elimination filter coefficient matrix.

$P_1$ denotes a $Q \times C$ matrix representing in-use subcarriers. If k = 1, 2, ···, Q, then in the k-th row of $P_1$, only column component corresponding to the k-th smaller number from among the in-use subcarrier numbers is "1" and the other components are "0". The character "t" affixed to the matrix indicates transposition. For example, $P_1^t$ of Equation 1 indicates a transposed matrix of $P_1$. The same is applied to the following equations.

For example, if the total number C of subcarriers is 4 and the number Q of in-use subcarriers is 2, then $P_1$ is a $2 \times 4$ matrix. Specifically, if four subcarrier numbers are 1, 2, 3 and 4, and two in-use subcarrier numbers are 1 and 3, then only the (1, 1) component and the (2, 3) component are "1" and the other components are all "0". Consequently, in this example, $P_1$ is expressed as Equation 2.

$$P_1 = \begin{bmatrix} 1 & 0 & 0 & 0 \\ 0 & 0 & 1 & 0 \end{bmatrix} \quad \text{[Equation 2]}$$

$P_2$ denotes a $(C - Q) \times C$ matrix representing idle subcarriers. If k = 1, 2, ···, C - Q, then in the k-th row of $P_2$, only the column component corresponding to the k-th smaller number from among the idle subcarrier numbers is "1" and the other components are "0".

For example, if the total number C of subcarriers is 4 and the number Q of in-use subcarriers is 2, then $P_2$ is a $2 \times 4$ matrix. Specifically, if the four subcarrier numbers are 1, 2, 3 and 4, and the two in-use subcarrier numbers are 2 and 4, then only the (1, 2) component and the (2, 4) component are "1" and the other components are all "0". In this example, $P_2$ is expressed as Equation 3.

$$P_? = \begin{bmatrix} 0 & 1 & 0 & 0 \\ 0 & 0 & 0 & 1 \end{bmatrix} \text{[Equation 3]}$$

I denotes a C × C unit matrix.

F' denotes a C × (C - Q) matrix obtained by extracting (C - Q) columns from the farthest left column of an FFT matrix F having C-number of analysis points. This FFT matrix F having C-number of analysis points is a C × C matrix in which the (k, m) -th component (k = 1, 2, ⋯, C, m = 1, 2, ⋯, C) is exp (-j2$\pi$ × (k - 1) × (m - 1)/C); j is an imaginary number unit.

Interblock interference elimination using the interference elimination filter coefficient W is performed based on Equation 4.

$$\mathbf{d} = \mathbf{Wr} \qquad \text{[Equation 4]}$$

In Equation 4, d denotes a data vector after the interference elimination is performed. This vector d is a C-dimensional column vector, and the k-th component thereof (k = 1, 2, ⋯, C) is data having eliminated therefrom interference data corresponding to subcarrier number k (k = 1, 2, ⋯, C). Q-number of components corresponding to in-use subcarrier numbers are extracted from among the vector d and sent to the equalizer/decoder 35.

The character r denotes a C-dimensional column vector and is obtained by segmenting the received data sent from the GI elimination/FFT unit 30 for each block of C-number of symbols.

The equalizer/decoder 3 5 receives a data channel and channel estimation value and performs an equalizing/decoding process to extract an information sequence. As described above, the data channel used herein is supplied directly from the GI elimination/FFT unit 30 or supplied after an interference elimination process is performed thereto by the interference elimination filter coefficient calculation/interference elimination unit 34.

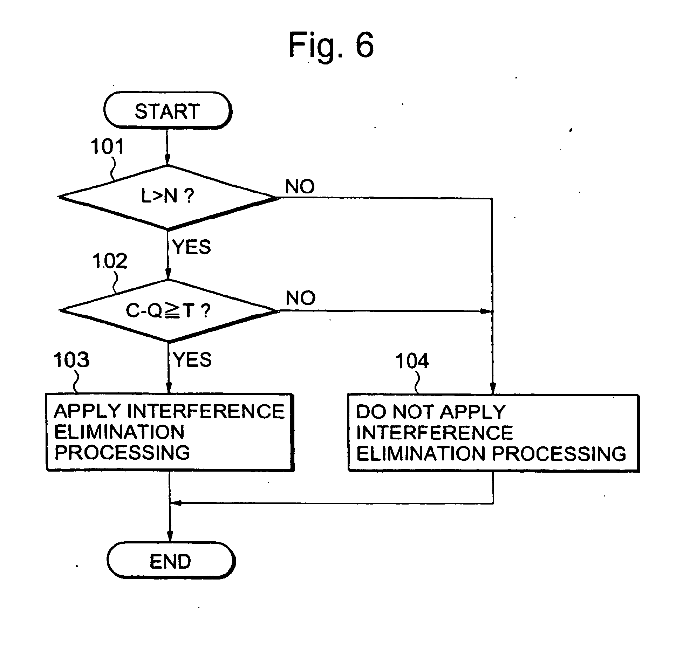

Fig. 6 is a flowchart showing an example of an interference elimination operation by the receiving unit of the radio communication apparatus according to the present exemplary embodiment. Referring to Fig. 6, first, the delay time determination/in-use subcarrier setting unit 32 determines whether or not a maximum delay time of a delayed wave is greater than the length of the GI of the data channel, i.e., L > N (101).

If L > N, the delay time determination/ i n-use subcarrier setting unit 32 the determines whether or not the number of idle subcarriers is equal to or greater than the number of symbols corresponding to a length of a maximum delay time exceeding a GI, i.e., C - Q ≥ T (102).

If C - Q≥T, the delay time determination/in-use subcarrier setting unit 32 causes the switch 33 to select the terminal 33b, and thus the process by the interference elimination filter coefficient calculation/interference elimination unit 34 is applied to the data channel (103).

Meanwhile, if it is determined in operation 101 that L > N is not satisfied, or if it is determined in operation 102 that C - Q ≥ T is not satisfied, the delay time determination/in-use subcarrier setting unit 32 causes the switch 33 to select the terminal 33a, and thus the process by the interference elimination filter coefficient calculation/interference elimination unit 34 is not performed on the data channel (104).

As described above, in the radio communication system according to the present exemplary embodiment, the radio communication apparatus in the transmitting side selects subcarriers to be used based on the subcarrier selection information 36 fed back from the radio communication apparatus in the receiving side, and maps symbols onto the subcarriers selected for use, and "0" onto the other subcarriers. The radio communication apparatus in the receiving side determines whether or not a delayed wave exceeding a GI is contained in a received signal from the radio communication apparatus in the transmitting side, and if so, determines the number of idle subcarriers according to a length of a maximum delay exceeding a GI and feeds back subcarrier information to the radio communication apparatus in the transmitting side, and eliminates an interference component of the delayed wave from the received signal from the radio communication apparatus in the transmitting side by utilizing the fact that "0" has been inserted in the idle subcarriers.

Accordingly, in the radio communication system according to the present exemplary embodiment, the radio communication apparatus in the transmitting side inserts "0" into the idle subcarriers and the radio apparatus in the receiving side eliminates an interference component of delayed wave from a received signal by utilizing the presence of idle subcarriers having "0" inserted therein. And it is possible to determine interference caused by a delayed wave based on leakage into idle subcarriers originally having "0" to satisfactorily eliminate the interference. In the Orthogonal Frequency Division Multiplexing modulation system, the presence of a delayed wave causes leakage among subcarriers orthogonal to each other. In this case, some value emerges in idle subcarriers originally having "0". By utilizing this, interblock interference caused by a delayed wave can be estimated.

Also, in the radio communication system according to the present exemplary embodiment, the radio communication apparatus in the receiving side determines, based on a delay time of the delayedwave, whether or not to perform interference elimination. Thus, when a delay time of the delayed wave is long and then interference is caused by the delayed wave, the elimination process is performed to satisfactorily eliminate the interference.

Also, in the radio communication system according to the present exemplary embodiment, the radio communication apparatus in the receiving side determines, based on a delay profile generated from a received signal, whether or not a delayed wave exceeding a GI exists. If so, when idle subcarriers exist that are equal to or greater than corresponding to a length of a maximum delay time exceeding a GI, delayed wave components are eliminated by using the idle subcarriers. Thus, in communications using a GI, when interference is caused by a delayed wave exceeding a GI, the process is performed so that the interference can be satisfactorily eliminated.

Also, in the radio communication system according to the present exemplary embodiment, the number of in-use subcarriers and the arrangement thereof can be adaptively controlled according to a maximum delay time of the propagation path and a channel estimation value. Thus, interblock interference can be satisfactorily eliminated without varying the GI even when the delay time varies, allowing reception with satisfactory characteristics.

As the encoding scheme used in the encoder 23 and the equalizer/decoder 35, a variety of schemes are possible. However, selection of one from among them does not influence the nature of the present invention.

In the present exemplary embodiment, there is described a case in which the present invention is applied to communication based on the Orthogonal Frequency Division Multiplexing system using a GI. However, the present invention is not limited thereto. Even with a system not using a GI, when the present invention is applied to the system, interblock interference can be eliminated as with the present exemplary embodiment.

A second exemplary embodiment will be described with reference to the drawings. The difference between the second exemplary embodiment and the first exemplary embodiment lies in that the transmitting unit of the radio communication apparatus determines the number of in-use subcarriers and numbers thereof in a fixed manner without receiving subcarrier selection information from the receiving unit of an opposite apparatus. The number of in-use subcarriers and the subcarrier numbers are determined according to a maximum delay time based on the state of the propagation path preliminarily measured.

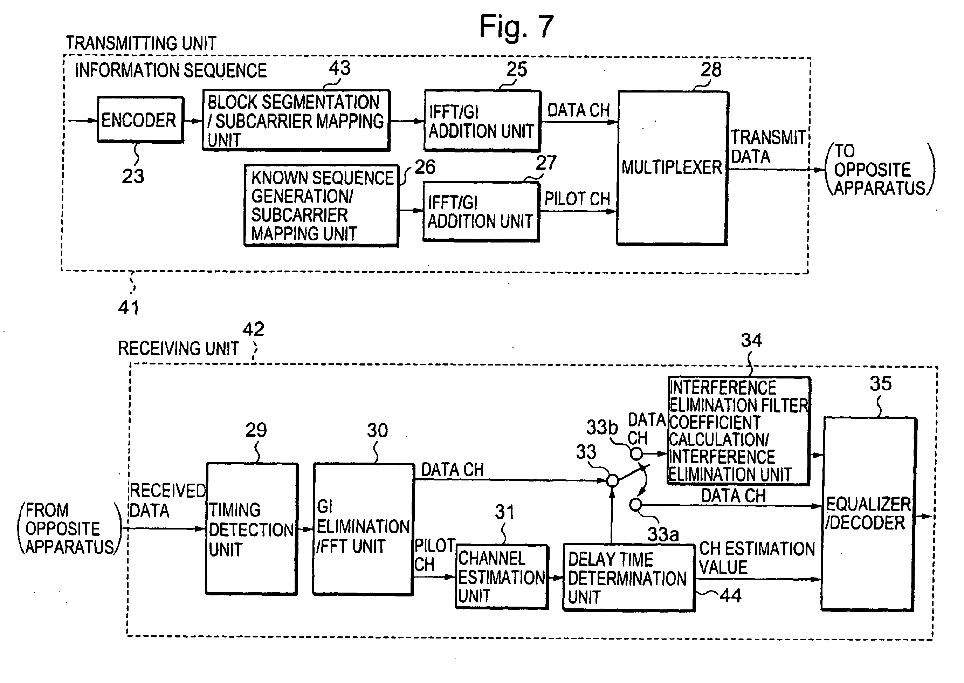

Fig. 7 is a block diagram showing a configuration of a radio communication apparatus according to the second exemplary embodiment. Referring to Fig. 7, the radio communication apparatuses 11 and 12 have the same configuration, and hence the radio communication apparatus 11 is shown here as representative.

Referring to Fig. 7, the radio communication apparatus 11 has a transmitting unit 41 and a receiving unit 42.

The transmitting unit 41 includes an encoder 23, a block segmentation/subcarrier mapping unit 43, a known sequence generation/subcarrier mapping unit 26, IFFT/GI addition units 25 and 27, and a multiplexer 28. The encoder 23, the known sequence generation/subcarrier mapping unit 26, the IFFT/GI addition units 25 and 27, and the multiplexer 28 may be the same as those of the first exemplary embodiment shown in Fig. 2.

The difference between the block segmentation/subcarrier mapping unit 43 and the block segmentation/subcarrier mapping unit 24 of the first exemplary embodiment lies in that the unit 43 determines the number of in-use subcarriers and numbers thereof in a fixed manner without receiving subcarrier selection information from the receiving unit of an opposite apparatus. In the block segmentation/subcarrier mapping unit 43, there is stored the predetermined number T of in-use subcarriers and the subcarrier numbers preliminarily set commonly for the receiving unit of the opposite apparatus and the other apparatus when a link setting is performed.

By using the predetermined number of subcarriers and the subcarrier numbers, the transmitting unit 41 performs in the similar manner as that of the first exemplary embodiment.

Meanwhile, the receiving unit 42 includes a timing detection unit 29, a GI elimination/FFT unit 30, a channel estimation unit 31, a delay time determination unit 44, a switch 33, an elimination filter coefficient calculation/interference elimination unit 34, and an equalizer/decoder

The timing detection unit 29, the GI elimination/FFT unit 30, the channel estimation unit 31, the switch 33, the elimination filter coefficient calculation/interference elimination unit 34 and the equalizer/decoder 35 may be the same as those of the first exemplary embodiment shown in Fig.2.

Unlike embodiments of the present invention, the difference between the delay time determination unit 44 and the delay time determination/in-use subcarrier setting unit 32 lies in that the unit 44 does not have a function of selecting in-use subcarriers and feeding them back to the opposite apparatus.

The delay time determination unit 44 measures a maximum delay time, determines whether or not it exceeds the GI, and according to the result, changes the state of the switch 33.

As described above, according to the present exemplary embodiment, the number of in-use subcarriers and the arrangement thereof set in a fixed manner are used; when there exists a delayed wave exceeding a GI, the radio communication apparatus in the receiving side eliminates the delayed wave component from the received signal by utilizing the presence of idle subcarriers having "0" mapped thereon. Accordingly, in a system having a small variation in maximum delay time, it is possible to satisfactorily eliminate interblock interference caused by the influence of a delayed wave exceeding a GI with a simple configuration and control.

A third exemplary embodiment will now be described.

In the first and second exemplary embodiments, the length Np of the pilot channel GI may be different from the length N of the data channel GI. However, in the third exemplary embodiment, it is assumed that these GI have the same length. A radio communication apparatus according to the third exemplary embodiment has the same configuration as that of the first or second exemplary embodiment, and only the operation of the IFFT/GI addition unit 27 is different.

According to the present exemplary embodiment, similarly to the IFFT/GI addition unit 25 for data channel, the IFFT/GI addition unit 27 for the pilot channel adds a GI of N-number of symbols.

According to the present exemplary embodiment, the length of the GI assigned to pilot channel is reduced and an additional length can be used for data channel transmission, thus enabling an effective use of resources.

According to the present exemplary embodiment, a maximum delay time L of the delayed wave may exceed a length N of the pilot channel GI. When a delayed wave exceeds a GI, the pilot channel is subjected to interblock interference, deteriorating the channel estimation accuracy. However, the channel estimation accuracy can be improved by using a diversity antenna with plural antennas for reception.

For example, a maximum delay time may be measured for each reception antenna, and a channel estimation value which is obtained from a signal received from an antenna in which no delayed wave exceeding a GI is detected may be used. Also, if a delayed wave exceeding a GI is detected from received signals of all the antennas, when a channel estimation value may be used which is obtained from a received signal of an antenna having a smallest delay time, whereby accuracy deterioration can be reduced.

A fourth exemplary embodiment will now be described.

In the first exemplary embodiment, "0" is inserted in (C - Q) -number of subcarriers which are not selected. However, the present invention is not limited thereto. The value inserted in subcarriers not selected may be known in the apparatuses in the transmitting side and the receiving side. In this case, the apparatus in the receiving side may eliminate interference by utilizing the fact that a known value has been inserted in subcarriers which are not selected.

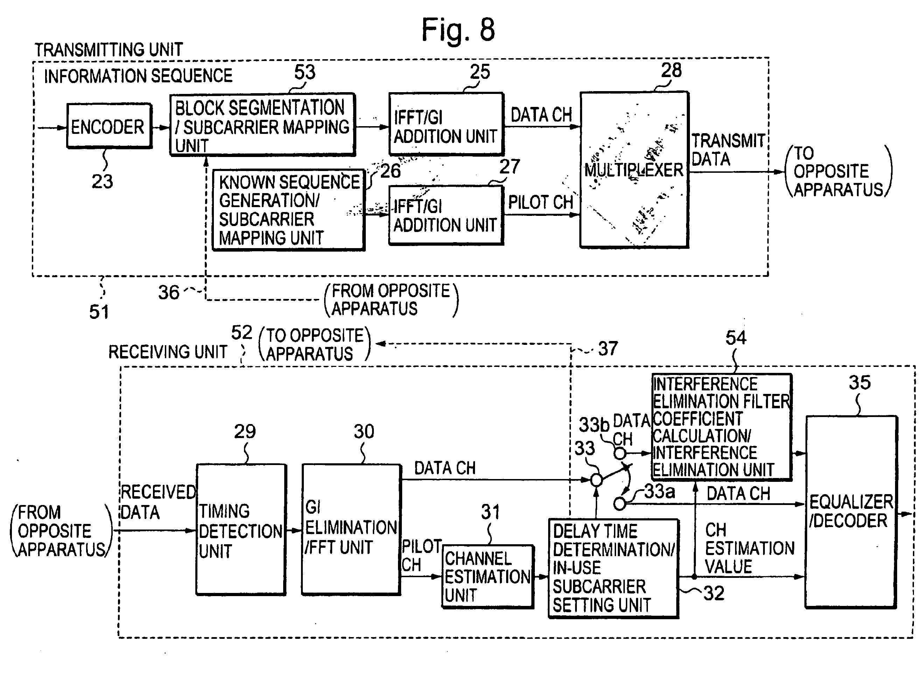

Fig. 8 is a block diagram showing a configuration of a radio communication apparatus according to a fourth exemplary embodiment. Referring to Fig. 8, the radio communication apparatus includes a transmitting unit 51 and a receiving unit 52.

The transmitting unit 51 includes an encoder 23, a block segmentation/subcarrier mapping unit 53, a known sequence generation/subcarrier mapping unit 26, IFFT/GI addition units 25 and 27, and a multiplexer 28. The encoder 23, the known sequence generation/subcarrier mapping unit 26, the IFFT/GI addition units 25 and 27, and the multiplexer 28 may be the same as those of the first exemplary embodiment shown in Fig. 2.

The difference between the block segmentation/subcarrier mapping unit 53 and the block segmentation/subcarrier mapping unit 24 lies in that a known value is inserted in idle subcarriers. This value is known in both the radio communication apparatus and the opposite apparatus.

The transmitting unit 51 operates similarly to that of the first exemplary embodiment except that a known value is inserted in idle subcarriers.

Meanwhile, the receiving unit 52 includes a timing detection unit 29, a GI elimination/FFT unit 30, a channel estimation unit 31, a delay time determination/in-use subcarrier setting unit 32, a switch 33, an elimination filter coefficient calculation/interference elimination unit 54 and an equalizer/decoder 35.

The timing detection unit 29, the GI elimination/FFT unit 30, the channel estimation unit 31, the delay time determination/in-use subcarrier setting unit 32, the switch 33 and the equalizer/decoder 35 may be the same as those of the first exemplary embodiment shown in Fig. 2.

The difference between the elimination filter coefficient calculation/interference elimination unit 54 and that of the first exemplary embodiment shown in Fig. 2 lies in that after a known value component mapped on idle subcarriers is subtracted from a data channel supplied from the GI elimination/FFT unit 30, interblock interference is eliminated by using the interference elimination filter coefficient.

The received signal component of a known value mapped on idle subcarriers and then transmitted is the result of receiving the known value inserted by the transmitting unit of the opposite apparatus via a propagation path, and thus obtained by multiplying by the known value a channel estimation value being the result of estimating the propagation path characteristics.

The interference elimination filter coefficient used to eliminate interblock interference may be the same as that of the first exemplary embodiment expressed as Equation 1.

As described above, in the radio communication system of the present exemplary embodiment, the radio communication apparatus in the transmitting side inserts a known value in idle subcarriers, and the radio communication apparatus in the receiving side performs an interference elimination process after subtracting from a data channel a known value component being received through a propagation path Accordingly, even when a variety of known values not equal to "0" are used as the value inserted in idle subcarriers, interference elimination caused by the influence of a delayed wave exceeding a GI may be satisfactorily eliminated as with the first exemplary embodiment.

The derivation of an interference elimination filterWvalue used in each of the above described exemplary embodiments will now be described.

Here, to derive an interference elimination filter W, the following variables are defined in addition to the variables contained in Equation 1.

$h_i$ (i = 0, 1, 2, ⋯, L) denotes a temporal response of a delayed wave which arrives with a delay corresponding to number-i of symbols. Herein, i = 0 indicates an incoming wave with no delay, i.e., a direct wave.

d (k) denote a C-dimensional column vector obtained by arranging transmit symbols (i.e., a symbol corresponding to one OFDM symbol) of ablock from which interference is to be eliminated, in the order of smaller subcarrier number.

d (k - 1) denotes a C-dimensional column vector obtained by arranging transmit symbols of a block preceding a block from which interference is to be eliminated, in the order of smaller subcarrier number.

$d_1$ (k) denotes a Q-dimensional column vector obtained by arranging Q-number of symbols to be mapped on in-use subcarriers contained in a block from which interference is to be eliminated, in the order of smaller subcarrier number.

$d_2$ (k) denote a (C - Q) -dimensional column vector obtained by arranging (C - Q)-number of known symbols to be mapped on idle subcarriers contained in a block from which interference is to be eliminated, in the order of smaller subcarrier number. For example, when "0" is mapped on idle subcarriers, all the elements are "0".

A denotes a diagonal matrix in which the diagonal components, i.e. , the (i, i)-th components (i = 0, 1, 2, ⋯, C) are a channel response of the i-th subcarrier and the other components are all "0". This $\Lambda$ is a C × C matrix indicating a channel estimation value.

$H_{IBI}$ denotes a C × C matrix in which the (m, C- L + N + m + k) -th components are $h_{L-k}$ (k = 0, 1, 2, ⋯, L - N - 1; m = 1, 2, ⋯, L - N - k) and the other components are all "0". $H_{IBI}$ is expressed as Equation 5.

$$\cdots \mathbf{H}_{IBI} = \begin{bmatrix} & & h_L & \cdots & h_{N+2} & h_{N+1} \\ & & & \ddots & & h_{N+2} \\ & & & & \ddots & \vdots \\ & & & & & h_L \\ & & & & & \\ & \mathbf{0} & & & & \\ & & & & & \end{bmatrix} \qquad \text{[Equation 5]}$$

H denotes a C × C matrix and is a Toeplitz matrix in which the first row is $[h_0, 0, \cdots\cdots, 0, h_L, 0, \cdots, h_2, h_1]$ and the k-th row (k = 0, 1, 2, ⋯, C) is a value obtained by rotating right the first row by (k - 1)-number of components. H is expressed as Equation 6.

$$H = \begin{bmatrix} h_0 & 0 & 0 & \cdots & \cdots & 0 & h_L & \cdots & h_N & \cdots & h_2 & h_1 \\ h_1 & h_0 & \ddots & & & & 0 & \ddots & & \ddots & & h_2 \\ & h_1 & \ddots & \ddots & & & & & \ddots & \ddots & & \vdots \\ h_N & & \ddots & \ddots & \ddots & & & & \ddots & \ddots & & h_N \\ & \ddots & & \ddots & \ddots & \ddots & \mathbf{0} & & & \ddots & \ddots & \vdots \\ h_L & & \ddots & & \ddots & \ddots & \ddots & & & & \ddots & h_L \\ 0 & \ddots & & \ddots & & \ddots & \ddots & \ddots & & & & 0 \\ & \ddots & & & \ddots & & \ddots & \ddots & \ddots & & & \vdots \\ & & \ddots & & & \ddots & & \ddots & \ddots & \ddots & & \vdots \\ & & & \ddots & & & \ddots & & \ddots & \ddots & \ddots & \vdots \\ \mathbf{0} & & & & \ddots & \ddots & & \ddots & & \ddots & \ddots & 0 \\ & & & & & 0 & h_1 & \cdots & h_N & \cdots & h_1 & h_0 \end{bmatrix} \quad \text{[Equation 6]}$$

$S_N$ denotes a C × C matrix in which the (N + i, i) -th component (i = 1, 2, ⋯, C - N) and the (i, C -N + 1)-th component (i = 1, 2, ⋯, N) are "1" and the other components are all "0". $S_N$ is expressed as Equation 7.

$$S_N = \begin{bmatrix} & & & & 1 & & & \mathbf{0} \\ & & & & & \ddots & & \\ & & & & & & \ddots & \\ & & & & & & & 1 \\ & & \mathbf{0} & & & & & \\ 1 & & & & & & & \\ & \ddots & & & & & & \\ \mathbf{0} & & \ddots & & & & & \\ & & & 1 & & & & \end{bmatrix} \quad \text{[Equation 7]}$$

Also, as for these matrices defined, relationships shown in Equation 8 and Equation 9 hold.

$$d(k) = P_1{}' d_1(k) + P_2{}' d_2(k) \qquad \text{[Equation 8]}$$

$$H = F^{-1} \Lambda F \qquad \text{[Equation 9]}$$

Data r obtained by eliminating the GI and performing an FFT process in the GI elimination/FFT unit 30 may be expressed as Equation 10 by using these variables. Here, it is assumed that a block from which interference is to be eliminated is subjected to interference from an immediately preceding block.

$$r = FH_{IBI}F^{-1}d(k-1) + F(H - H_{IBI}S_N)F^{-1}d(k) \qquad \text{[Equation 10]}$$

The first term in the right-hand side of Equation 10, i.e., $FH_{IBI}F^{-1}d(k-1)$ is an interference component from an immediately preceding block of the block from which interference is to be eliminated. The second term i.e., $F(H - H_{IBI}S_N)F^{-1}d(k)$ is the component of the block from which interference is to be eliminated.

This r includes the component of in-use subcarriers and that of idle subcarriers. Thus, firstly the component of the known value mapped on the idle subcarriers is subtracted from r. The component of the idle subcarriers to be subtracted may be expressed as $AP_2^{t}d_2(k)$ by using channel estimation value A.

It is noted that the process of subtracting a known value component from a data channel in the fourth exemplary embodiment may be an equivalent to a process of subtracting from data r containing a known value component, $AP_2^{t}d_2(k)$ being the component of known value $d_2(k)$ which is received through_the propagation path estimated to have a channel estimation value A.

When "0" is mapped on idle subcarriers, the known value component passing through the propagation path is "0". Thus this subtraction is unnecessary.

When Equation 8 and Equation 9 are applied to the subtraction result, Equation 11 is provided.

$$r - AP_2'd_2(k) = FH_{IBI}F^{-1}d(k-1) + F\left(HF^{-1}P_1'd_1(k) - H_{IBI}S_N F^{-1}d(k)\right)$$

[Equation 11]

With respect to Equation 11, when interference from an immediately preceding block is eliminated by the interference elimination filter W, simultaneous equations composed of Equation 12 and Equation 13 are provided.

$$P_1 WFH_{IBI} = 0 \qquad \text{[Equation 12]}$$

$$P_1 WF\left(HF^{-1}P_1'd_1(k) - H_{IBI}S_N F^{-1}d(k)\right) = P_1 AP_1'd_1(k) \qquad \text{[Equation 13]}$$

In Equation 12, 0 denotes a $Q \times C$ matrix whose components are all 0.

When the simultaneous equations composed of Equation 12 and Equation 13 are solved, the interference elimination filter coefficient matrix W is determined by using Equation 1 described above.

While this invention has been particularly shown and described with reference to exemplary embodiments thereof, it will be understood by those skilled in the art that various changes in form and details may be made therein without departing from the scope of the invention as defined by the appended claims. The above-described exemplary embodiments should be considered in a descriptive sense only and are not for purposes of limitation. Therefore, the scope of the invention is defined not by the detailed description of the invention but by the appended claims, and all differences within the scope will be construed as being included in the present invention.

Each feature disclosed in this specification (which term includes the claims) and/or shown in the drawings may be incorporated in the invention independently of other disclosed and/or illustrated features.

The text of the abstract filed herewith is repeated here as part of the specification.

A radio communication system, a radio communication apparatus, receiving apparatus, and radio communication method. The radio communication system includes a transmitting unit which includes a mapping circuit for generating a data channel which has a known value inserted in idle subcarriers, and a transmitter for transmitting a radio signal including the data channel. The radio communication system may also include a receiving unit which includes a receiver for receiving the radio signal from the transmitting unit and an interference eliminator for eliminating a delayed wave component from the data channel based on the known value inserted in the idle subcarriers.

**Claims**

1.  A radio communication system comprising:

    a transmitting unit (21, 51), comprising:

       a mapping circuit (24, 26, 53) for generating a data channel having in-use subcarriers onto which data is mapped and idle subcarriers into which a known value is inserted;
       a guard interval adder for adding a guard interval of length 'N' symbols to the data channel; and,
       a transmitter for transmitting a first radio signal including the data channel;

    a receiving unit (22, 52), comprising:

       a receiver for receiving the first radio signal from the transmitting unit;
       a channel estimator for generating a delay profile from the radio signal upon which a determination of a length 'L' of a delay time is based; and,
       an interference eliminator (34, 54) for eliminating a delayed wave component from the data channel based on a comparison of values in idle subcarriers as received with the corresponding known value inserted in the idle subcarriers by the mapping circuit;

    wherein the interference eliminator (34, 54) is adapted to eliminate the delayed wave component if the length 'L' in number of symbols, of the delay time exceeds a length 'N' in number of symbols, of the guard interval, and the number of idle subcarriers in the data channel of the received signal is not less than the difference between the length 'L' in number of symbols, of the delay time and the length 'N' in number of symbols, of the guard interval;
    wherein, in the case where the length 'L' of the delay time exceeds the length 'N' of the guard interval, the receiving unit (22, 52) is configured for feeding subcarriers selection information back to the transmitting unit, which subcarrier selection information represents selected subcarriers to be set as in-use subcarriers; and
    wherein the transmitting unit (21, 51) is configured for setting in-use subcarriers and idle subcarriers for a data channel of a second radio signal in dependence on said fed back selection information.

2.  The radio communication system according to claim 1, wherein the interference eliminator is adapted to carry out an interference elimination process based on an estimation of an interference component leaked into in-use subcarriers from the idle subcarriers.

3.  The radio communication system according to claim 1, wherein the interference eliminator is adapted to carry out an interference elimination process which multiplies the received data channel by an interference elimination filter matrix obtained from a matrix representing in-use subcarriers, a matrix representing idle subcarriers and an FFT matrix having the number of analysis points equal to a total number of subcarriers.

4.  The radio communication system according to claim 1, wherein the interference eliminator (34, 54) is adapted to carry out an interference elimination process after eliminating a component corresponding to the known value from the received data channel.

5.  The radio communication system according to claim 1, wherein the known value is zero.

6.  The radio communication system according to claim 1, wherein the transmitting unit (21, 51) is adapted to multiplex a pilot channel onto the data channel and a number of symbols of a guard interval of the pilot channel is the same as a number of symbols of a guard interval of the data channel.

7.  Receiving apparatus comprising:

    a receiver for receiving, from a transmitting unit (21, 51), a first radio signal including a data channel having a guard interval of length 'N', in-use subcarriers onto which data is mapped and idle subcarriers into which a known value has been inserted;
    a channel estimator for generating a delay profile from the radio signal upon which a determination of a length 'L' of a delay time is based; and
    an interference eliminator (34, 54) for eliminating, in response to the result of the determination unit, a delayed wave component of the data channel by an interference elimination process based on a comparison of values in the idle subcarriers as received with the corresponding known value inserted in the idle subcarriers;

wherein the interference eliminator (34, 54) is adapted to eliminate the delayed wave component if the length 'L' in number of symbols, of the delay time exceeds the length 'N' in number of symbols, of the guard interval, and the number of idle subcarriers in the data channel of the received signal is not less than the difference between the length 'L' in number of symbols, of the delay time and the length 'N' in number of symbols, of the guard interval;

wherein, in the case where the length 'L' of the delay time exceeds the length 'N' of the guard interval, the receiving unit (22, 52) is configured for feeding subcarrier selection information back to a transmitting unit (21, 51), which subcarrier selection information represents selected subcarriers to be set as in-use subcarriers, for use by the transmitting unit (21, 51) in setting in-use subcarriers for a data channel of a second radio signal.

8. The receiving apparatus according to claim 7, wherein the interference eliminator is adapted to carry out an interference elimination process based on the estimation of an interference component leaked into in-use subcarriers from the idle subcarriers.

9. The receiving apparatus according to claim 7, wherein the interference eliminator is adapted to carry out an interference elimination process which multiplies the received data channel by an interference elimination filter matrix obtained from a matrix representing in-use subcarriers, a matrix representing idle subcarriers and an FFT matrix having the number of analysis points equal to the total number of subcarriers.

10. The receiving apparatus according to claim 7, wherein the interference eliminator is adapted to carry out an interference elimination process after eliminating the component corresponding to the known value from the received data channel.

11. The receiving apparatus according to claim 7, wherein the known value is zero.

12. A radio communication method comprising:

generating a data channel having in-use subcarriers onto which data is mapped and idle subcarriers into which a known value is inserted;
adding a guard interval of length 'N' symbols to the data channel;
transmitting a first radio signal including the data channel from a transmitting unit;
receiving the first radio signal at a receiving unit;
generating a delay profile from the radio signal upon which a determination of a length 'L' of a delay time is based; and,
eliminating a delayed wave component from the data channel based on a comparison of values in idle subcarriers as received with the corresponding known value inserted in the idle subcarriers by the mapping circuit;
wherein the delayed wave component is eliminated if the length 'L' in number of symbols, of the delay time exceeds the length 'N' in number of symbols, of the guard interval, and the number of idle subcarriers in the data channel of the received signal is not less than the difference between the length 'L' in number of symbols, of the delay time and the length 'N' in number of symbols, of the guard interval;
wherein, in the case where the length 'L' of the delay time exceeds the length 'N' of the guard interval, subcarrier selection information is fed back from the receiving unit (22, 42, 52) to the transmitting unit, which subcarrier selection information represents selected subcarriers to be set as in-use subcarriers; and
wherein the transmitting unit (21, 41, 51) sets in-use subcarriers and idle subcarriers for a data channel of a second radio signal in dependence on said selection information such that the number of in-use subcarriers.

13. The radio communication method according to claim 12, the eliminating process further comprising: estimating an interference component leaking into in-use subcarriers from the idle subcarriers; and, eliminating the interference component.

14. The radio communication method according to claim 12, the eliminating process further comprising: multiplying the received data channel by an interference elimination filter matrix obtained from a matrix representing in-use subcarriers, a matrix representing idle subcarriers and an FFT matrix having the number of analysis points equal to the total number of subcarriers.

15. The radio communication method according to claim 12, the eliminating process further comprising: eliminating the component corresponding to the known value from the received data channel.

**Patentansprüche**

1. Funkkommunikationssystem mit:

    einer Sendeeinheit (21, 51) mit:

        einer Abbildungsschaltung (24, 26, 53) zum Erzeugen eines Datenkanals mit aktiven Unterträgern, auf die Daten abgebildet werden, und freien Unterträgern, in die ein bekannter Wert eingefügt wird;
        einer Einrichtung zum Hinzufügen eines Schutzintervalls (Guard Intervall) mit einer Länge von "N" Symbolen in den Datenkanal; und
        einem Sender zum Übertragen eines ersten Funksignals, das den Datenkanal enthält;

    einer Empfangseinheit (22, 52) mit:

        einem Empfänger zum Empfangen des ersten Funksignals von der Sendeeinheit;
        einer Kanalschätzeinrichtung zum Erzeugen eines Verzögerungsprofils vom Funksignal, auf dem die Bestimmung einer Länge 'L' einer Verzögerungszeit basiert; und
        einer Interferenzeliminierungseinrichtung (34, 54) zum Eliminieren einer verzögerten Wellenkomponente vom Datenkanal basierend auf einem Vergleich von empfangenen Werten in freien Unterträgern mit dem entsprechenden bekannten Wert, der durch die Abbildungsschaltung in die freien Unterträger eingefügt wurde,

    wobei die Interferenzeliminierungseinrichtung (34, 54) dazu eingerichtet ist, die verzögerte Wellenkomponente zu eliminieren, wenn die Länge 'L', gemessen in einer Anzahl von Symbolen, der Verzögerungszeit eine Länge 'N', gemessen in einer Anzahl von Symbolen, des Schutzintervalls überschreitet und die Anzahl freier Unterträger im Datenkanal des empfangenen Signals nicht kleiner ist als die Differenz zwischen der Länge 'L', gemessen in einer Anzahl von Symbolen, der Verzögerungszeit und der Länge 'N', gemessen in einer Anzahl von Symbolen, des Schutzintervalls,
    wobei, wenn die Länge 'L' der Verzögerungszeit die Länge 'N' des Schutzintervalls überschreitet, die Empfangseinheit (22, 52) dafür konfiguriert ist, Unterträgerauswahlinformation zur Sendeeinheit zurückzusenden, wobei die Unterträgerauswahlinformation ausgewählte Unterträger darstellt, die als aktive Unterträger festgelegt werden sollen, und
    wobei die Sendeeinheit (21, 51) dafür konfiguriert ist, aktive Unterträger und freie Unterträger für einen Datenkanal eines zweiten Funksignals in Abhängigkeit von der zurückgesendeten Auswahlinformation festzulegen.

2. Funkkommunikationssystem nach Anspruch 1, wobei die Interferenzeliminierungseinrichtung dazu eingerichtet ist, eine Interferenzeliminierungsverarbeitung basierend auf einer Schätzung einer Interferenzkomponente auszuführen, die von den freien Unterträgern in die aktiven Unterträger überkoppelt.

3. Funkkommunikationssystem nach Anspruch 1, wobei die Interferenzeliminierungseinrichtung dazu eingerichtet ist, eine Interferenzeliminierungsverarbeitung auszuführen, die den empfangenen Datenkanal mit einer Interferenzeliminierungsfiltermatrix multipliziert, die von einer aktive Unterträger darstellenden Matrix, einer freie Unterträger darstellenden Matrix und einer FFT-Matrix erhalten wird, deren Anzahl von Analysepunkten der Gesamtzahl der Unterträger gleicht.

4. Funkkommunikationssystem nach Anspruch 1, wobei die Interferenzeliminierungseinrichtung (34, 54) dazu eingerichtet ist, eine Interferenzeliminierungsverarbeitung auszuführen, nachdem eine dem bekannten Wert entsprechende Komponente vom empfangenen Datenkanal eliminiert wurde.

5. Funkkommunikationssystem nach Anspruch 1, wobei der bekannte Wert null beträgt.

6. Funkkommunikationssystem nach Anspruch 1, wobei die Sendeeinheit (21, 51) dazu eingerichtet ist, einen Pilotkanal auf den Datenkanal zu multiplexen und die Anzahl von Symbolen eines Schutzintervalls des Pilotkanals der Anzahl von Symbolen eines Schutzintervalls des Datenkanals gleicht.

7. Empfangsgerät mit:

einem Empfänger zum Empfangen eines ersten Funksignals, das einen Datenkanal mit einem Schutzintervall mit einer Länge 'N', aktiven Unterträgern, auf die Daten abgebildet sind, und freien Unterträgern aufweist, in die ein bekannter Wert eingefügt worden ist, von einer Sendeeinheit (21, 51);
einer Kanalschätzeinrichtung zum Erzeugen eines Verzögerungsprofils vom Funksignal, auf dem die Bestimmung einer Länge 'L' einer Verzögerungszeit basiert; und
einer Interferenzeliminierungseinrichtung (34, 54) zum Eliminieren einer verzögerten Wellenkomponente des Datenkanals durch eine Interferenzeliminierungsverarbeitung basierend auf einem Vergleich von empfangenen Werten in den freien Unterträgern mit dem entsprechenden bekannten Wert, der in die freien Unterträger eingefügt ist, in Antwort auf das durch die Bestimmungseinrichtung erhaltene Ergebnis,
wobei die Interferenzeliminierungseinrichtung (34, 54) dazu geeignet ist, die verzögerte Wellenkomponente zu eliminieren, wenn die Länge 'L', gemessen in einer Anzahl von Symbolen, der Verzögerungszeit die Länge 'N', gemessen in einer Anzahl von Symbolen, des Schutzintervalls überschreitet und die Anzahl freier Unterträger im Datenkanal des empfangenen Signals nicht kleiner ist als die Differenz zwischen der Länge 'L', gemessen in einer Anzahl von Symbolen, der Verzögerungszeit und der Länge 'N', gemessen in einer Anzahl von Symbolen, des Schutzintervalls,
wobei, wenn die Länge 'L' der Verzögerungszeit die Länge 'N' des Schutzintervalls überschreitet, die Empfangseinheit (22, 52) dafür konfiguriert ist, Unterträgerauswahlinformation an eine Sendeeinheit (21, 51) zurückzusenden, wobei die Unterträgerauswahlinformation ausgewählte Unterträger darstellt, die als aktive Unterträger festgelegt werden sollen, und zur Verwendung durch die Sendeeinheit (21, 51) beim Festlegen der aktiven Unterträger für einen Datenkanal eines zweiten Funksignals dient.

8. Empfangsgerät nach Anspruch 7, wobei die Interferenzeliminierungseinrichtung dazu eingerichtet ist, eine Interferenzeliminierungsverarbeitung basierend auf einer Schätzung einer Interferenzkomponente auszuführen, die von den freien Unterträgern in die aktiven Unterträger überkoppelt.

9. Empfangsgerät nach Anspruch 7, wobei die Interferenzeliminierungseinrichtung dazu eingerichtet ist, eine Interferenzeliminierungsverarbeitung auszuführen, die den empfangenen Datenkanal mit einer Interferenzeliminierungsfiltermatrix multipliziert, die von einer aktive Unterträger darstellenden Matrix, einer freie Unterträger darstellenden Matrix und einer FFT-Matrix erhalten wird, deren Anzahl von Analysepunkten der Gesamtzahl der Unterträger gleicht.

10. Empfangsgerät nach Anspruch 7, wobei die Interferenzeliminierungseinrichtung dazu eingerichtet ist, eine Interferenzeliminierungsverarbeitung auszuführen, nachdem eine dem bekannten Wert entsprechende Komponente vom empfangenen Datenkanal eliminiert wurde.

11. Empfangsgerät nach Anspruch 7, wobei der bekannte Wert null beträgt.

12. Funkkommunikationsverfahren mit den Schritten:

Erzeugen eines Datenkanals mit aktiven Unterträgern, auf die Daten abgebildet werden, und freien Unterträgern, in die ein bekannter Wert eingefügt wird;
Hinzufügen eines Schutzintervalls mit einer Länge von 'N' Symbolen zum Datenkanal;
Übertragen eines ersten Funksignals, das den Datenkanal enthält, von einer Sendeeinheit;
Empfangen des ersten Funksignals an einer Empfangseinheit;
Erzeugen eines Verzögerungsprofils vom Funksignal, auf dem die Bestimmung einer Länge 'L' einer Verzögerungszeit basiert; und
Eliminieren einer verzögerten Wellenkomponente vom Datenkanal basierend auf einem Vergleich von empfangenen Werten in freien Unterträgern mit dem entsprechenden bekannten Wert, der durch die Abbildungseinheit in die freien Unterträger eingefügt wurde,
wobei die verzögerte Wellenkomponente eliminiert wird, wenn die Länge 'L', gemessen in einer Anzahl von Symbolen, der Verzögerungszeit die Länge 'N', gemessen in einer Anzahl von Symbolen, des Schutzintervalls überschreitet und die Anzahl freier Unterträger im Datenkanal des empfangenen Signals nicht kleiner ist als die Differenz zwischen der Länge 'L', gemessen in einer Anzahl von Symbolen, der Verzögerungszeit und der Länge 'N', gemessen in einer Anzahl von Symbolen, des Schutzintervalls,
wobei, wenn die Länge 'L' der Verzögerungszeit die Länge 'N' des Schutzintervalls überschreitet, Unterträgerauswahlinformation von der Empfangseinheit (22, 42, 52) zur Sendeeinheit zurückgesendet wird, wobei die Unterträgerauswahlinformation ausgewählte Unterträger darstellt, die als aktive Unterträger festgelegt werden sollen, und

wobei die Sendeeinheit (21, 41, 51) aktive Unterträger und freie Unterträger für einen Datenkanal eines zweiten Funksignals in Abhängigkeit von der Auswahlinformation festlegt, wie die Anzahl von aktiven Unterträgern.

**13.** Funkkommunikationsverfahren nach Anspruch 12, wobei die Eliminierungsverarbeitung ferner die Schritte aufweist:

Schätzen einer Interferenzkomponente, die von den freien Unterträgern in aktive Unterträger überkoppelt; und Eliminieren der Interferenzkomponente.

**14.** Funkkommunikationsverfahren nach Anspruch 12, wobei der Eliminierungsprozess ferner die Schritte aufweist:

Multiplizieren des empfangenen Datenkanals mit einer Interferenzeliminierungsfiltermatrix, die von einer aktive Unterträger darstellenden Matrix, einer freie Unterträger darstellenden Matrix und einer FFT-Matrix erhalten wird, deren Anzahl von Analysepunkten der Gesamtzahl von Unterträgern gleicht.

**15.** Funkkommunikationsverfahren nach Anspruch 12, wobei die Eliminierungsverarbeitung ferner das Eliminieren der dem bekannten Wert entsprechenden Komponente vom empfangenen Datenkanal aufweist.

**Revendications**

**1.** Système de communication radio comprenant :

une unité d'émission (21, 51), comprenant :

- un circuit de mappage (24, 26, 53) pour générer un canal de données ayant des sous-porteuses en cours d'utilisation sur lesquelles des données sont mappées et des sous-porteuses au repos dans lesquelles une valeur connue est insérée ;
- un dispositif d'ajout d'intervalle de garde pour ajouter un intervalle de garde de durée 'N' symboles au canal de données ; et,
- un émetteur pour émettre un premier signal radio comprenant le canal de données ;

une unité de réception (22, 52), comprenant :

- un récepteur pour recevoir le premier signal radio en provenance de l'unité d'émission ;
- un estimateur de canal pour générer un profil de retard à partir du signal radio sur lequel une détermination d'une durée 'L' d'un temps de retard est basée ; et,
- un éliminateur d'interférence (34, 54) pour éliminer une composante d'onde retardée du canal de données sur la base d'une comparaison de valeurs dans des sous-porteuses au repos telles que reçues avec la valeur connue correspondante insérée dans les sous-porteuses au repos par le circuit de mappage ;

dans lequel l'éliminateur d'interférence (34, 54) est adapté pour éliminer la composante d'onde retardée si la durée 'L', en nombre de symboles, du temps de retard dépasse une durée 'N', en nombre de symboles, de l'intervalle de garde, et le nombre de sous-porteuses au repos dans le canal de données du signal reçu n'est pas inférieur à la différence entre la durée 'L', en nombre de symboles, du temps de retard et la durée 'N', en nombre de symboles, de l'intervalle de garde ;

dans lequel, dans le cas où la durée 'L' du temps de retard dépasse la durée 'N' de l'intervalle de garde, l'unité de réception (22, 52) est configurée pour réinjecter des informations de sélection de sous-porteuse dans l'unité d'émission, lesquelles informations de sélection de sous-porteuse représentent des sous-porteuses sélectionnées destinées à être établies en tant que sous-porteuses en cours d'utilisation ; et

dans lequel l'unité d'émission (21, 51) est configurée pour établir des sous-porteuses en cours d'utilisation et des sous-porteuses au repos pour un canal de données d'un second signal radio en fonction desdites informations de sélection réinjectées.

**2.** Système de communication radio selon la revendication 1, dans lequel l'éliminateur d'interférence est adapté pour réaliser un processus d'élimination d'interférence sur la base d'une estimation d'une composante d'interférence qui a fui dans des sous-porteuses en cours d'utilisation depuis les sous-porteuses au repos.

**3.** Système de communication radio selon la revendication 1, dans lequel l'éliminateur d'interférence est adapté pour réaliser un processus d'élimination d'interférence qui multiplie le canal de données reçu par une matrice de filtre d'élimination d'interférence obtenue à partir d'une matrice représentant des sous-porteuses en cours d'utilisation, d'une matrice représentant des sous-porteuses au repos et d'une matrice FFT ayant le nombre de points d'analyse égal à un nombre total de sous-porteuses.

**4.** Système de communication radio selon la revendication 1, dans lequel l'éliminateur d'interférence (34, 54) est adapté pour réaliser un processus d'élimination d'interférence après l'élimination d'une composante correspondant à la valeur connue du canal de données reçu.

**5.** Système de communication radio selon la revendication 1, dans lequel la valeur connue est zéro.

**6.** Système de communication radio selon la revendication 1, dans lequel l'unité d'émission (21, 51) est adaptée pour multiplexer un canal pilote sur le canal de données et un nombre de symboles d'un intervalle de garde du canal pilote est le même qu'un nombre de symboles d'un intervalle de garde du canal de données.

**7.** Appareil de réception comprenant :

un récepteur pour recevoir, en provenance d'une unité d'émission (21, 51), un premier signal radio comprenant un canal de données ayant un intervalle de garde de durée 'N', des sous-porteuses en cours d'utilisation sur lesquelles des données sont mappées et des sous-porteuses au repos dans lesquelles une valeur connue a été insérée ;
un estimateur de canal pour générer un profil de retard à partir du signal radio sur lequel une détermination d'une durée 'L' d'un temps de retard est basée ; et
un éliminateur d'interférence (34, 54) pour éliminer, en réponse au résultat de l'unité de détermination, une composante d'onde retardée du canal de données par un processus d'élimination d'interférence sur la base d'une comparaison de valeurs dans les sous-porteuses au repos telles que reçues avec la valeur connue correspondante insérée dans les sous-porteuses au repos ;
dans lequel l'éliminateur d'interférence (34, 54) est adapté pour éliminer la composante d'onde retardée si la durée 'L', en nombre de symboles, du temps de retard dépasse la durée 'N', en nombre de symboles, de l'intervalle de garde, et le nombre de sous-porteuses au repos dans le canal de données du signal reçu n'est pas inférieur à la différence entre la durée 'L', en nombre de symboles, du temps de retard et la durée 'N', en nombre de symboles, de l'intervalle de garde;
dans lequel, dans le cas où la durée 'L' du temps de retard dépasse la durée 'N' de l'intervalle de garde, l'unité de réception (22, 52) est configurée pour réinjecter des informations de sélection de sous-porteuse dans une unité d'émission (21, 51), lesquelles informations de sélection de sous-porteuse représentent des sous-porteuses sélectionnées destinées à être établies en tant que sous-porteuses en cours d'utilisation, pour l'utilisation par l'unité d'émission (21, 51) dans l'établissement de sous-porteuses en cours d'utilisation pour un canal de données d'un second signal radio.

**8.** Appareil de réception selon la revendication 7, dans lequel l'éliminateur d'interférence est adapté pour réaliser un processus d'élimination d'interférence sur la base de l'estimation d'une composante d'interférence qui a fui dans des sous-porteuses en cours d'utilisation depuis les sous-porteuses au repos.

**9.** Appareil de réception selon la revendication 7, dans lequel l'éliminateur d'interférence est adapté pour réaliser un processus d'élimination d'interférence qui multiplie le canal de données reçu par une matrice de filtre d'élimination d'interférence obtenue à partir d'une matrice représentant des sous-porteuses en cours d'utilisation, d'une matrice représentant des sous-porteuses au repos et d'une matrice FFT ayant le nombre de points d'analyse égal au nombre total de sous-porteuses.

**10.** Appareil de réception selon la revendication 7, dans lequel l'éliminateur d'interférence est adapté pour réaliser un processus d'élimination d'interférence après l'élimination de la composante correspondant à la valeur connue, du canal de données reçu.

**11.** Appareil de réception selon la revendication 7, dans lequel la valeur connue est zéro.

**12.** Procédé de communication radio comprenant :

la génération d'un canal de données ayant des sous-porteuses en cours d'utilisation sur lesquelles des données sont mappées et des sous-porteuses au repos dans lesquelles une valeur connue est insérée ;

l'ajout d'un intervalle de garde de durée 'N' symboles au canal de données ;

l'émission d'un premier signal radio comprenant le canal de données en provenance d'une unité d'émission ;

la réception du premier signal radio au niveau d'une unité de réception ;

la génération d'un profil de retard à partir du signal radio sur lequel une détermination d'une durée 'L' d'un temps de retard est basée ; et,

l'élimination d'une composante d'onde retardée du canal de données sur la base d'une comparaison de valeurs dans des sous-porteuses au repos telles que reçues avec la valeur connue correspondante insérée dans les sous-porteuses au repos par le circuit de mappage ;

dans lequel la composante d'onde retardée est éliminée si la durée 'L', en nombre de symboles, du temps de retard dépasse la durée 'N', en nombre de symboles, de l'intervalle de garde, et le nombre de sous-porteuses au repos dans le canal de données du signal reçu n'est pas inférieur à la différence entre la durée 'L', en nombre de symboles, du temps de retard et la durée 'N', en nombre de symboles, de l'intervalle de garde ;

dans lequel, dans le cas où la durée 'L' du temps de retard dépasse la durée 'N' de l'intervalle de garde, des informations de sélection de sous-porteuse sont réinjectées de l'unité de réception (22, 42, 52) à l'unité d'émission, lesquelles informations de sélection de sous-porteuse représentent des sous-porteuses sélectionnées destinées à être établies en tant que sous-porteuses en cours d'utilisation ; et

dans lequel l'unité d'émission (21, 41, 51) établit des sous-porteuses en cours d'utilisation et des sous-porteuses au repos pour un canal de données d'un second signal radio en fonction desdites informations de sélection telles que le nombre de sous-porteuses en cours d'utilisation.

13. Procédé de communication radio selon la revendication 12, le processus d'élimination comprenant en outre : l'estimation d'une composante d'interférence qui fuit dans des sous-porteuses en cours d'utilisation depuis les sous-porteuses au repos ; et, l'élimination de la composante d'interférence.

14. Procédé de communication radio selon la revendication 12, le processus d'élimination comprenant en outre : la multiplication du canal de données reçu par une matrice de filtre d'élimination d'interférence obtenue à partir d'une matrice représentant des sous-porteuses en cours d'utilisation, d'une matrice représentant des sous-porteuses au repos et d'une matrice FFT ayant le nombre de points d'analyse égal au nombre total de sous-porteuses.

15. Procédé de communication radio selon la revendication 12, le processus d'élimination comprenant en outre : l'élimination de la composante correspondant à la valeur connue du canal de données reçu.

# Fig. 1

11

12

RADIO COMMUNICATION
APPARATUS

RADIO COMMUNICATION
APPARATUS

TRANSMITTING UNIT

TRANSMITTING UNIT

RECEIVING UNIT

RECEIVING UNIT

## Fig. 2

TRANSMITTING UNIT

INFORMATION SEQUENCE

ENCODER → BLOCK SEGMENTATION / SUBCARRIER MAPPING UNIT `24` → IFFT/GI ADDITION UNIT `25` —DATA CH→ MULTIPLEXER `28` —TRANSMIT DATA→ (TO OPPOSITE APPARATUS)

`23`

KNOWN SEQUENCE GENERATION/ SUBCARRIER MAPPING UNIT `26` → IFFT/GI ADDITION UNIT `27` —PILOT CH→

`21`   `36`   (FROM OPPOSITE APPARATUS)

`22` (TO OPPOSITE APPARATUS) ← `37`

RECEIVING UNIT

`34` INTERFERENCE ELIMINATION FILTER COEFFICIENT CALCULATION/ INTERFERENCE ELIMINATION UNIT

`35`

(FROM OPPOSITE APPARATUS) —RECEIVED DATA→ TIMING DETECTION UNIT `29` → GI ELIMINATION /FFT UNIT `30` —DATA CH→ `33b` DATA CH

`33`

`33a` DATA CH

EQUALIZER /DECODER `35`

PILOT CH → CHANNEL ESTIMATION UNIT `31` → DELAY TIME DETERMINATION/ IN-USE SUBCARRIER SETTING UNIT —CH ESTIMATION VALUE→ `32`

EP 1 718 023 B1

# Fig. 3

DATA CH

INFORMATION SEQUENCE

ENCODING

BLOCK
SEGMENTATION

```
┌─────┬─────┬ ‥‥‥ ┬─────┐
```

MAPPING

PILOT CH

KNOWN
SEQUENCE

IFFT

```
┌──────┬──────┬ ‥‥‥ ┬──────┐
```

IFFT

```
┌──────┬──────┬       ┬──────┐
│ DATA │ DATA │ ‥‥‥  │ DATA │
│  1   │  2   │       │  N   │
└──────┴──────┴       └──────┘
```

GI ADDITION

GI ADDITION

```
┌──┬──────┐  ┌──┬──────┐       ┌──┬──────┐
│GI│DATA 1│  │GI│DATA 2│  ‥‥  │GI│DATA N│
└──┴──────┘  └──┴──────┘       └──┴──────┘
```

|← 1 OFDM SYMBOL →|

TIME DIVISION MULTIPLEXING

# Fig. 4

Q SYMBOL

| S1 | S2 | S3 | · · · · | SQ |

MAPPING ON IN-USE
SUBCARRIER

| S1 | S2 | 0 | S3 | · · · | 0 | SQ | 0 |

C SYMBOL

# Fig. 5

N SYMBOL

C SYMBOL

C SYMBOL

N SYMBOL

(C+N) SYMBOL

GI (GUARD INTERVAL)

# Fig. 6

```
            ┌─────────┐
            │  START  │
            └────┬────┘
  101            │
       ◇─────────▼─────────◇      NO
      ◇      L>N ?           ◇──────────────────────┐
       ◇─────────┬─────────◇                        │
  102            │ YES                               │
       ◇─────────▼─────────◇      NO                 │
      ◇      C-Q≧T ?         ◇──────────────┐        │
       ◇─────────┬─────────◇                │        │
  103            │ YES               104     │        │
  ┌──────────────▼──────────┐     ┌─────────▼────────▼──────┐
  │ APPLY INTERFERENCE      │     │ DO NOT APPLY            │
  │ ELIMINATION             │     │ INTERFERENCE            │
  │ PROCESSING              │     │ ELIMINATION PROCESSING  │
  └──────────────┬──────────┘     └─────────────┬───────────┘
                 │◄─────────────────────────────┘
            ┌────▼────┐
            │   END   │
            └─────────┘
```

# Fig. 7

TRANSMITTING UNIT

INFORMATION SEQUENCE

ENCODER → BLOCK SEGMENTATION / SUBCARRIER MAPPING UNIT `43` → IFFT/GI ADDITION UNIT `25` → DATA CH → MULTIPLEXER `28` → TRANSMIT DATA → (TO OPPOSITE APPARATUS)

`23`

KNOWN SEQUENCE GENERATION/ SUBCARRIER MAPPING UNIT `26` → IFFT/GI ADDITION UNIT `27` → PILOT CH → MULTIPLEXER

`41`

RECEIVING UNIT `42`

(FROM OPPOSITE APPARATUS) → RECEIVED DATA → TIMING DETECTION UNIT `29` → GI ELIMINATION /FFT UNIT `30` → DATA CH → `33` → INTERFERENCE ELIMINATION FILTER COEFFICIENT CALCULATION/ INTERFERENCE ELIMINATION UNIT `34` → DATA CH → EQUALIZER /DECODER `35`

`33b` DATA CH

PILOT CH → CHANNEL ESTIMATION UNIT `31` → DELAY TIME DETERMINATION UNIT → `33a` → CH ESTIMATION VALUE → EQUALIZER /DECODER

`44`

EP 1 718 023 B1

# Fig. 8

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2004208254 A

- WO 03039088 A1

### Non-patent literature cited in the description

- **OHNO. S.** Maximum Likelihood Inter-Carrier Interference Suppression for Wireless OFDM with Null Subcarriers. *ICASSP,* 2005, vol. III, 849-851

- **KARP T et al.** Zero-forcing Frequency Domain Equalization For DMT Systems With Insufficient Guard Interval. *ICASSP,* 2003, vol. IV, 221-223